# EUROPEAN PATENT SPECIFICATION

(11) **EP 0 430 304 B1**
(45) Date of publication and mention of the grant of the patent: **01.06.1994**
(21) Application number: 90123048.2
(22) Date of filing: 19.03.1990
(51) Int. Cl.: B01D 53/22

(54) **Separation of gas mixtures**
Trennung von Gasgemischen
Séparation de mélanges de gaz

(30) Priority: 22.03.1989 GB 8906594
(43) Date of publication of application: 05.06.1991
(62) Divisional of application: 90302947.8
(73) Proprietor: The BOC Group plc, Windlesham Surrey GU20 6HJ (GB)
(72) Inventor: Garrett, Michael Ernest, Woking, Surrey (GB)
(74) Representative: Gough, Peter

(56) References cited:
- EP-A- 0 110 858
- EP-A- 0 266 745
- US-A- 4 717 407

## Description

This invention relates to the separation of gas mixtures, particularly air, which are laden with water vapour.

Although it was recognised in the nineteenth century that a selective gas separation could be performed as a result of different permeation velocities of the respective components of the mixture, not until the 1960s did suitable membranes with adequately high permeability and separation efficiencies become available to allow such gas separation to be performed on a significant commercial scale. Since the 1960s, the use of membranes to separate gas mixtures has become a well known technique in the production of industrial gases. Plants for the separation of gas mixture by membranes are constructed so as to present a large surface area of membrane to the gas mixture to be separated. For example, such plants may employ a multitude of identical, elongate, hollow fibres which are formed of a suitable semi-permeable membrane and which extend in parallel to one another. The fibres are appropriately mounted in a pressure vessel. The gas mixture to be separated is fed into the pressure vessel at or near one end outside the fibres. It flows along of the fibres. The insides of the fibres are maintained at a pressure lower than that which obtains on the outside of them. If the gas mixture to be separated consists of two components, the faster permeating component passes more and more to the low pressure side. Accordingly, the gas on the outside of the fibres (high pressure side) becomes richer in the slower permeating component as it flows across the outside of the fibres and product gas, rich in the more slowly diffusing component, may be withdrawn at pressure from the end of the pressure vessel opposite that at which the feed gas is introduced.

Such membrane plants are now available commercially for separating air. Membranes are employed which are relatively more permeable to oxygen than they are to nitrogen so that the product gas, at pressure is enriched in nitrogen. The advantage of known membranes for separating air is that as well as being relatively permeable to oxygen they are also able to separate carbon dioxide and water vapour from the incoming air. Nonetheless, it is viewed as being desirable in the art to remove water vapour from the incoming air. For this purpose, a drier in the form of a refrigerator or chiller is used which operates typically at a degree or two C above freezing point. See the paper entitled "Generon Air Separation in Systems - Membranes in Gas Separation and Enrichment", K B McReynolds, The Proceedings of the 4th BOC Priestley Conference, Royal Society of Chemistry Special Publication No 62, pp 342-350. (Generon is a registered trademark.) The use of such a chiller has a number of disadvantages, the most important of which is that the gas entering the vessel containing the membrane is not truly dry, ie it has a dew point of about 2°C. In addition, the operation of a mechanical refrigerator to give the necessary chilling involves extra consumption of energy, and the refrigerator itself is prone to mechanical failure. Reference is also made to the document EP-A-0 266 745 which teaches the removal of water vapour from an air stream using a preliminary membrane separation vessel. It is an aim of the present invention to provide a method and apparatus which provides an improved preliminary separation of water vapour from an incoming gas mixture for separation.

According to one aspect of the present invention there is provided a method of separating a gas mixture comprising at least two main components and water vapour wherein water vapour is separated by preliminary membranes from a compressed stream of the gas mixture and the resulting water-depleted stream is then separated by further membranes located downstream of the preliminary membranes to produce a dry permeate gas enriched in one main component and a pressurised product stream enriched in the other main component, wherein a stream of the dry permeate gas is passed over the preliminary membranes on their permeate side whereby to lower the partial pressure of water vapour on the permeate side of the preliminary membranes and thereby facilitate separation of the water vapour from the pressurised gas mixture.

The invention also provides apparatus for performing this method comprising a preliminary membrane separation vessel having an inlet for a pressurised gas stream, comprising at least two main components and water vapour, and containing membranes adapted to separate water vapour from the gas mixture, wherein the preliminary membrane vessel has an outlet for pressurised gas mixture communicating with an inlet to a main membrane gas separation vessel located downstream of said preliminary membrane separation vessel and containing membranes adapted to effect separation as between two main components of the gas mixture, wherein the main vessel has on its permeate side an outlet which communicates with an inlet on the permeate side of the preliminary membrane vessel, there also being an outlet for moist gas from the membrane side of the said preliminary vessel.

The method according to the invention exploits the fact that the separation as between two main components of the dried gas produces a permeate gas with an even lower dew point than the dried gas with the result that this permeate gas may with advantage be used to purge the permeate side of membranes used to dry the incoming gas mixture.

The method and apparatus according to the invention are particularly suited for use in separating air. Membranes that effect a separation as between nitrogen and oxygen are well known in the art.

Examples of suitable membranes for drying the incoming gas are disclosed in US Patent No 4 783 201.

A method and apparatus according to the present invention will now be described by way of example with reference to the accompanying diagrammatic drawing, which is schematic circuit diagram of an air separation plant.

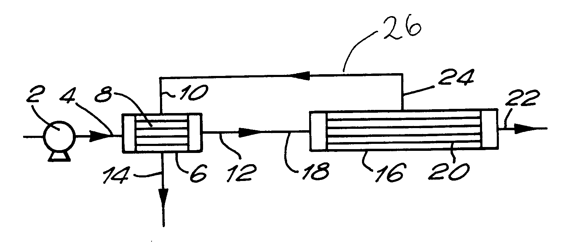

Referring to the Figure of the drawing air is compressed in compressor 2 and fed to an inlet 4 of vessel 6 containing membranes 8. The vessel 6 has a second gas inlet 10 and two outlets 12 and 14. The compressed air flows through the vessel 6 from the inlet 4 to the outlet 12. Its path through the vessel 6 takes it across one surface of each of the membranes 8 in the vessel 6. The membranes are of a composition and molecular structure such that water vapour diffuses or permeates therethrough relatively rapidly in comparison with oxygen and nitrogen. Accordingly, the air is depleted in water vapour as it flows through the vessel 6 to the outlet 12. The permeate gas which is enriched in water vapour flows out of the vessel 6 through the outlet 14 at a pressure a little above atmospheric pressure. The separation of the water vapour from the incoming air is facilitated by there being an appreciable pressure difference between the air side and the permeate gas side of the membranes. Accordingly, therefore, the incoming air is preferably compressed in the compressor 2 to a pressure of at least 5 bars and typically to a pressure in the range 8 to 12 bars.

The pressurised air stream, now depleted in water vapour flows into a main membrane separation vessel 16 located downstream of the vessel 6 through an inlet 18. The vessel 16 contains membranes 20 which are of a composition and molecular structure so as to separate oxygen from nitrogen by virtue of the different relative rates of diffusion of these two gases therethrough. The vessel 16 has an outlet 22 for product nitrogen and an outlet 24 for permeate gas. The membranes 20 are arranged in the vessel 18 such that the incoming air flows along one side of each membrane from the inlet 18 to the outlet 22. Oxygen diffuses or permeates faster through the membranes 20 and thus the permeate gas is enriched in oxygen while the product gas leaving through the outlet 22 is enriched in nitrogen. Typically, nitrogen containing less than 5% by volume oxygen can be formed. The permeate gas leaves the vessel 16 through the outlet 24 at a pressure just above atmospheric pressure. The pressure drop across the membranes is effective to reduce the dew point of the permeate gas (in comparison to that of the air entering the vessel 16 through the inlet 18).

The dry permeate gas from the vessel 16 is led via a conduit 26 to the inlet 10 of the vessel 6 and thereby flushes with dry gas the permeate spaces of the vessel 6. Accordingly, the partial pressure of water vapour in the permeate spaces of the vessel 6 is reduced and this facilitates separation of the water vapour from the incoming air in the membrane separation vessel 6. Humid gas is discharged from the vessel 6 through the outlet 14. This gas is typically waste gas but it is enriched in oxygen and may therefore be used in any process in which humid oxygen enriched air may be employed, for example, in oxygenating waste water so as to reduce its biochemical oxygen demand.

In an alternative embodiment of the apparatus according to the invention the hollow members may in both vessels 6 and 16 be disposed transversely to the flow of gas to be separated and this gas admitted to the tubular passages inside the fibres. The permeate gas from the vessel 16 is passed over the surfaces of the membranes on the vessel 6 on their permeate gas side in accordance with the invention. In a similar embodiment of the invention there is just one vessel with transverse drying membranes disposed upstream of transverse membranes adapted to separate between oxygen and nitrogen. Permeate gas from the downstream membranes is withdrawn from the vessel and then returned to the vessel on the permeate gas side of the upstream membranes in accordance with the invention.

## Claims

1. A method of separating a gas mixture comprising at least two main components and water vapour whereby water vapour is separated by preliminary membranes (8) from a compressed stream of the gas mixture and the resulting water-depleted stream is then separated by further membranes (20) located downstream of the preliminary membranes to produce a dry permeate gas enriched in one main component and a pressurised product stream enriched in the other main component, characterised in that a stream of the dry permeate gas is passed over the preliminary membranes (8) on their permeate side whereby to lower the partial pressure of water vapour on the permeate side of the preliminary membranes (8) and thereby facilitate separation of the water vapour from the pressurised gas mixture.

2. A method according to claim 1, characterised in that the preliminary membranes (8) and the further membranes (20) both extend in the general direction of flow of the gas mixture to be separated.

3. A method according to claim 1, characterised in that the preliminary membranes (8) and the further membranes (20) both extend transversely to the flow of the gas mixture to be separated.

4. A method according to claim 3, characterised in that both sets of membranes (8, 20) are located in the same vessel as one another.

5. Apparatus for separating a gas mixture comprising at least two main components and water vapour, comprising a preliminary membrane separation vessel (6) having an inlet (4) for a pressurised gas stream, comprising at least two main components and water vapour, and containing membranes (8) adapted to separate water vapour from the gas mixture, wherein the preliminary membrane vessel (6) has an outlet (14) for moist gas from the membrane side and an outlet (12) for pressurised gas mixture communicating with an inlet (18) to a main membrane gas separation vessel (16) located downstream of said preliminary membrane separation vessel and containing membranes (20)adapted to effect separation as between two main components of the gas mixture, characterised in that the main vessel (16) has on its permeate side an outlet (24) which communicates with an inlet on the permeate side of the preliminary membrane vessel (6).

6. Apparatus according to claim 5, characterised in that the preliminary membranes and the further membranes both extend in what in use is the general direction of flow of the gas mixture to be separated.

7. Apparatus according to claim 5, characterised in that the preliminary membranes and the further membranes both extend transversely to what in use is the general direction of flow of the gas mixture to be separated.

## Patentansprüche

1. Ein Verfahren zur Trennung einer Gasmischung mit zumindest zwei Hauptkomponenten und Wasserdampf, wodurch Wasserdampf durch vorläufige Membranen (8) aus einem komprimierten Strom der Gasmischung getrennt wird und der resultierende, wasserabgereicherte Strom dann durch weitere Membranen (20) getrennt wird, die stromabwärts der vorläufigen Membranen angeordnet sind, um ein trockenes Permeatgas, das an einer Hauptkomponente angereichert ist, und einen unter Druck stehenden Produktstrom, der an der anderen Hauptkomponente angereichert ist, zu erzeugen,
dadurch **gekennzeichnet,**
daß ein Strom des trockenen Permeatgases über die vorläufigen Membranen (8) auf der Permeatseite geführt wird, um dadurch den Partialdruck von Wasserdampf auf der Permeatseite der vorläufigen Membranen (8) zu erniedrigen und dadurch die Trennung des Wasserdampfes aus der unter Druck stehenden Gasmischung zu vereinfachen.

2. Ein Verfahren nach Anspruch 1, dadurch gekennzeichnet, daß die vorläufigen Membranen (8) und die weiteren Membranen (20) sich beide in der allgemeinen Richtung des Stromes der zu trennenden Gasmischung erstrecken.

3. Ein Verfahren nach Anspruch 1, dadurch gekennzeichnet, daß die vorläufigen Membranen (8) und die weiteren Membranen (20) sich beide quer zu dem Strom der zu trennenden Gasmischung erstrecken.

4. Ein Verfahren nach Anspruch 3, dadurch gekennzeichnet, daß beide Sätze von Membranen (8, 20) in dem gleichen Gefäß wie einander angeordnet sind.

5. Vorrichtung zur Trennung einer Gasmischung mit zumindest zwei Hauptkomponenten und Wasserdampf, die ein vorläufiges Membrantrennungsgefäß (6) mit einem Einlaß (4) für einen unter Druck stehenden Gasstrom umfaßt, der zumindest zwei Hauptkomponenten und Wasserdampf umfaßt, und Membranen (8) enthält, die dazu angepaßt sind, Wasserdampf aus der Gasmischung zu trennen, worin das vorläufige Membrangefäß (6) einen Auslaß (14) für feuchtes Gas auf der Membranseite und einen Auslaß (12) für die unter Druck stehende Gasmischung hat, die mit einem Einlaß (18) zu einem Hauptmembrangastrennungsgefäß (16) kommuniziert, das stromabwärts des vorläufigen Membrantrennungsgefäßes angeordnet ist und Membranen (20) enthält, die dazu angepaßt sind, die Trennung wie zwischen zwei Hauptkomponenten der Gasmischung zu bewirken, dadurch gekennzeichnet, daß das Hauptgefäß (16) auf seiner Permeatseite einen Auslaß (24) hat, welcher mit einem Einlaß auf der Permeatseite des vorläufigen Membrangefäßes (6) kommuniziert.

6. Vorrichtung nach Anspruch 5, dadurch gekennzeichnet, daß die vorläufigen Membranen und die weiteren Membranen sich beide in der Richtung erstrecken, die in der Verwendung die allgemeine Richtung des Stroms der zu trennenden Gasmischung ist.

7. Vorrichtung nach Anspruch 5, dadurch gekennzeichnet, daß die vorläufigen Membranen und die weiteren Membranen sich beide quer zu der Richtung erstrecken, die in der Verwendung die allgemeine Richtung des Stroms der zu trennenden Gasmischung ist.

## Revendications

1. Procédé de séparation d'un mélange de gaz contenant au moins deux éléments constituants principaux et de la vapeur d'eau, dans lequel la vapeur d'eau est séparée par des membranes préliminaires (8) d'un courant comprimé du mélange de gaz, et un courant résultant épuisé en eau est alors séparé par des membranes supplémentaires (20) placées en aval des membranes préliminaires, afin qu'un gaz sec qui a traversé les membranes et qui est enrichi en un premier élément constituant principal et un courant produit sous pression enrichi en un autre élément constituant principal soient produits, caractérisé en ce qu'un courant du gaz sec qui a traversé les membranes circule sur les membranes préliminaires (8) du côté de la matière qui a traversé les membranes, de manière que la pression partielle de vapeur d'eau du côté de la matière qui a traversé les membranes préliminaires (8) soit abaissée et facilite ainsi la séparation de la vapeur d'eau du mélange gazeux sous pression.

2. Procédé selon la revendication 1, caractérisé en ce que les membranes préliminaires (8) et les membranes supplémentaires (20) sont toutes disposées dans la direction générale de circulation du mélange de gaz à séparer.

3. Procédé selon la revendication 1, caractérisé en ce que les membranes préliminaires (8) et les membranes supplémentaires (20) sont toutes disposées transversalement au courant du mélange gazeux à séparer.

4. Procédé selon la revendication 3, caractérisé en ce que les deux ensembles de membranes (8, 20) sont placés dans le même réservoir.

5. Appareil de séparation d'un mélange gazeux contenant au moins deux éléments constituants principaux et de la vapeur d'eau, comprenant un réservoir de séparation préliminaire (6) à membranes ayant une entrée (4) d'un courant gazeux sous pression, comprenant au moins deux éléments constituants principaux et de la vapeur d'eau, et contenant les membranes (8) destinées à séparer la vapeur d'eau du mélange gazeux, dans lequel le réservoir préliminaire (6) à membranes a une sortie (14) de gaz humide du côté de la membrane et une sortie (12) du mélange gazeux sous pression communiquant avec une entrée (18) d'un réservoir (16) principal de séparation de gaz à membranes placé en aval du réservoir de séparation préliminaire à membranes et contenant des membranes (20) destinées à réaliser la séparation entre les deux éléments constituants principaux du mélange de gaz, caractérisé en ce que le réservoir principal (16) a, du côté de la matière qui a traversé, une sortie (24) qui communique avec une entrée placée du côté de la matière qui a traversé du réservoir préliminaire (6) à membranes.

6. Appareil selon la revendication 5, caractérisé en ce que les membranes préliminaires et les membranes supplémentaires sont toutes disposées dans ce qui constitue la direction générale de circulation du mélange gazeux à séparer pendant l'utilisation.

7. Appareil selon la revendication 5, caractérisé en ce que les membranes préliminaires et les membranes supplémentaires sont toutes disposées transversalement à la direction générale de circulation du mélange gazeux à séparer pendant l'utilisation.
